# EUROPÄISCHE PATENTSCHRIFT

(11) **EP 2 858 864 B1**
(45) Veröffentlichungstag und Bekanntmachung des Hinweises auf die Patenterteilung: **25.05.2016**
(21) Anmeldenummer: 13753146.3
(22) Anmeldetag: 19.08.2013
(51) Int. Cl.: B60S 3/04

(54) **VORRATSBEHÄLTER, AUFNAHME FÜR EINEN VORRATSBEHÄLTER UND FAHRZEUGBEHANDLUNGSANLAGE**
STORAGE CONTAINER, HOLDER FOR A STORAGE CONTAINER, AND VEHICLE TREATMENT PLANT
RÉSERVOIR, LOGEMENT POUR RÉSERVOIR, ET INSTALLATION DE TRAITEMENT POUR VÉHICULE

(30) Priorität: 20.08.2012 DE 102012107621
(43) Veröffentlichungstag der Anmeldung: 15.04.2015
(73) Patentinhaber: WashTec Holding GmbH, 86153 Augsburg (DE)
(72) Erfinder: KISER, Franz, 86510 Ried (DE)
(74) Vertreter: Charrier, Rapp & Liebau
(86) Internationale Anmeldenummer: PCT/EP2013/067230
(87) Internationale Veröffentlichungsnummer: WO 2014/029731

(56) Entgegenhaltungen:
- EP-A1- 0 896 914
- EP-A1- 1 414 682
- WO-A1-01/03859
- DE-A1-102006 022 477

## Beschreibung

Die Erfindung betrifft einen Vorratsbehälter zum Einsetzen in eine Aufnahme einer Fahrzeugbehandlungsanlage nach dem Oberbegriff des Anspruchs 1, eine Aufnahme für einen solchen Vorratsbehälter nach dem Oberbegriff des Anspruchs 8 und eine Fahrzeugbehandlungsanlage nach dem Oberbegriff des Anspruchs 13.

Bei bekannten Fahrzeugbehandlungsanlagen, insbesondere Fahrzeugwaschanlagen, werden auf die Fahrzeuge unterschiedliche Behandlungsflüssigkeiten aufgebracht. Beispielsweise werden zu Begin des Reinigungsvorgangs Schmutzlöser aufgebracht, welche den auf dem Fahrzeug befindlichen Schmutz anlösen und aufweichen. Anschließend wir der Schmutzlöser abgespült oder mittels Hochdruckwasserstrahl entfernt. Das eigentliche Waschschampoo wird anschließend während der nachfolgenden Bürstenwäsche aufgesprüht und danach nochmals mit klarem Wasser oder ggf. auch enthärtetem Wasser nachgespült.. Abhängig vom gewünschten Waschprogramm kann dann ggf. noch ein Wachs aufgebracht werden. Üblicherweise werden diese Behandlungsflüssigkeiten dadurch bereitgestellt, dass in ein Grundmedium, in der Regel Wasser, hochdosierte Zusatzmitteln, wie z.B. Waschshampoos, Schaumbildner, Wachse, Trocknungshilfsmittel, Seifen, Felgenreiniger, Insektenentferner, etc. beigefügt werden. Diese in der Regel flüssigen oder viskosen Zusatzmittel sind üblicherweise in Vorratsbehälter abgefüllt, welche in Aufnahmen einer Dosiervorrichtung der Fahrzeugwaschanlage angeordnet und mit Dosierpumpen in das Grundmedium dosierbar sind.

Eine solchen Vorratsbehälter offenbart die DE 10 2006 022 477 A1 in Form einer Kartusche zum Einsetzen in eine Aufnahmevorrichtung einer Fahrzeugbehandlungseinrichtung mit einem Innenraum zur Aufnahme eines flüssigen oder viskosen Mediums und einem Auslass, der zum Gebrauch der Kartusche geöffnet werden. Diese Kartusche weist einen Einlass auf, über den sich flüssige oder viskose Zusatzstoffe in die Kartusche einfüllen lassen. Am Kartuschenboden ist ein Auslass vorgesehen, welcher mit einem in einer Kartuschenaufnahme angeordneten Einlass einer Dosiervorrichtung verbunden werden kann, um den in der Kartusche enthaltenen Zusatzstoff der Dosiervorrichtung zuführen zu können. Dort besteht das Problem, dass das Einsetzen der Kartusche in eine Kartuschenaufnahme schwierig und umständlich ist. Auch ist die genaue Positionierung des an der Kartusche angeordneten Transponders zur Auslesevorrichtung der Kartuschenaufnahme schwierig.

Die US 6 158 486 A offenbart eine Aufnahme für einen Vorratsbehälter mit einer am Einlass der Aufnahme angeordneten Kupplung. Eine daran durch Lippen gebildete lösbare Schnappverbindung hält den Behälter gegen eine Feder in der Aufnahme. Hierdurch wird verhindert, dass der Behälter innerhalb eines durch die Schnappverbindung vorgegebenen Kräftebereichs aus der Aufnahme herausgedrückt wird. Bei Überschreiten des Kräftebereichs kann der Vorratsbehälter jedoch ohne weiteres aus der Aufnahme herausgezogen werden, eine sichere Verriegelung der Kupplung zwischen Aufnahme und Behälter findet nicht statt.

Die US 5,651,398 A offenbart ein Ausgabesystem für chemische Flüssigkeiten, bei dem in einer Aufnahme eine Vielzahl von mit den Flüssigkeiten befüllte Behälter eingestellt werden. Über Schläuche werden die Behälter mit einer Dosiereinheit des Ausgabesystems verbunden. Zum Einführen der Behälter in die Aufnahme weisen die Behälter waagrecht verlaufende und gleichmäßig voneinander beabstandete Führungsnuten auf.

Die US 2003/0141316 A1 offenbart eine Aufnahme für einen flüssigkeitsgefüllten Behälter, welcher an die Form der Aufnahme angepasst ist.

Die US 6,279,836 B1 offenbart ein Ausgabesystem für Flüssigkeiten, bei dem in einer Aufnahme zwei flüssigkeitsgefüllte Behälter eingeschoben werden können. Hierzu sind dort waagrecht verlaufende und gleichmäßig voneinander beabstandete Führungsnuten an den Behältern bzw. Führungsstifte an der Aufnahme angeordnet.

Die US 2010/0206400 A2 offenbart ein Produktausgabesystem mit einer Vielzahl von Aufnahmen für eine Vielzahl von Flüssigkeitsbehälter, wobei dort waagrecht verlaufende und gleichmäßig voneinander beabstandete Führungsschienen an der Aufnahme vorgesehen sind.

Die US 2009/0173753 A1 offenbart eine Kartusche, die in eine Aufnahme eines Staubsaugers einsetzbar ist. Dabei ist die Außenkontur der Kartusche an die Form der Aufnahme angepasst.

Die EP 1 414 682 A1 betrifft eine Vorrichtung zur Versorgung einer Fahrzeugwaschanlage mit chemischen Zusatzstoffen, die in eine Kartusche eingefüllt sind. Die Kartusche kann verwechslungssicher in eine Aufnahmevorrichtung der Waschanlage angesetzt werden, wobei der Zusatzstoff der Kartusche im Betrieb der Fahrzeugwaschanlage je nach Bedarf kontinuierlich entnehmbar ist.

Die EP 0 896 914 A1 betrifft ein automatisiertes Systeme zum Waschen und Wachsen von Fahrzeugen, bei dem hochkonzentrierte Reinigungs- und Wachschemikalien verwendet werden. Diese werden von einer Speisepumpe aus einem Konzentratreservoir oder einem integrierten Beutel in einem Kartonbehälter zu einem Konzentrat-Speisesteuerimgsblock transportiert. Ein erster Teil des Konzentrates strömt dann weiter durch den Speisesteuerungsblock und wird zu einem Einspritzventil und von dort zu einem Sprühbogen gepumpt, wo es mit Wasser gemischt und auf das Fahrezug aufgebracht wird. Ein zweiter, überschüssiger Teil des Konzentrats wird aus dem Speisesteuerungsblock wieder zurück in das Konzentratreservoir 12 gepumpt.

Die WO 01/03859 A1 betrifft ein System zur Versorgung einer Fahrzeugwaschanlage mit konzentrierten Waschchemikalien, welche jeweils in eigenen zylindrischen Behältern vorgehalten werden.

Der Erfindung liegt deshalb die Aufgabe zugrunde, einen Vorratsbehälter zum Einsetzen in eine Aufnahme einer Fahrzeugbehandlungsanlage, eine Aufnahme für einen solchen Vorratsbehälter und eine Fahrzeugbehandlungsanlage zu schaffen, welche die oben genannten

Nachteile überwinden und ein einfaches Einsetzen in die Aufnahme und ein sicheres Halten des Vorratsbehälters in der Aufnahme zu ermöglichen.

Die Erfindung löst diese Aufgabe durch einen Vorratsbehälter mit den Merkmalen des Anspruchs 1 oder 7, eine Aufnahme mit den Merkmalen des Anspruchs 8 oder 12 und eine Fahrzeugbehandlungsanlage mit den Merkmalen des Anspruchs 13. Vorteilhafte Ausgestaltungen und zweckmäßige Weiterbildungen der Erfindung sind in den abhängigen Ansprüchen angegeben.

Ein eingangs genannter Vorratsbehälter ist erfindungsgemäß dadurch gekennzeichnet, dass am Vorratsbehälter mindestens ein Führungselement zum in Eingriffnehmen von mindestens einem an der Aufnahme angeordneten Führungsgegenelement beim Einsetzen des Vorratsbehälters in eine Einschubrichtung in die Aufnahme vorgesehen ist. Eine entsprechend ausgebildete eingangs genannte Aufnahme ist erfindungsgemäß dadurch gekennzeichnet, dass an der Aufnahme eine Führung mit mindestens einem Führungsgegenelement zum Führen von mindestens einem an dem Vorratsbehälter angeordneten Führungselement beim Einsetzen des Vorratsbehälters in eine Einschubrichtung in die Aufnahme vorgesehen ist. Hierdurch kann der Vorratsbehälter auf einfache Weise in die Aufnahme eingeschoben werden.

Dabei läuft das mindestens eine Führungselement in Einschubrichtung schräg auf eine in Einschubrichtung verlaufende Mittelachse des Vorratsbehälters zu, und das mindestens eine Führungsgegenelement läuft entsprechend in Einschubrichtung schräg auf eine in Einschubrichtung verlaufende Mittelachse der Aufnahme zu und/oder wobei genau zwei Führungselemente und genau zwei Führungsgegenelemente vorgesehen sind, deren Abstand voneinander sich jeweils in Einschubrichtung aneinander angepasst verringert. Durch diese beiden Ausführungen lässt sich der Vorratsbehälter auf einfache Weise so einführen, dass der Auslass auf den Einlass ausgerichtet wird, so dass am Ende des Einsetzens beide einfach miteinander verbunden werden können.

In einer vorteilhaften Fortbildung der Erfindung kann das mindestens eine Führungsgegenelement in Einschubrichtung schräg nach unten zu einem Boden der Führung geneigt sein, wobei das mindestens eine Führungselement in Einschubrichtung entsprechend schräg nach unten geneigt ist.

Um ein zu weites Einschieben des Vorratsbehälters in die Aufnahme und somit Beschädigungen am Vorratsbehälter und der Aufnahme sowie ein unerwünschtes Auslaufen oder Verspritzen des Zusatzstoffe zu vermeiden, ist ein Längsanschlag vorgesehen, der bevorzugt aus Vorsprüngen an der Aufnahme und entsprechenden Rücksprüngen am Vorratsbehälter gebildet ist.

Bevorzugt kann das mindestens eine Führungselement an einem unterhalb des Bodens des Innenraums des Vorratsbehälters angeformten Führungskörper angeordnet sein. Der Führungskörper ist nicht mit Zusatzstoff gefüllt und somit robust gegenüber dem Einsetzprozess, so dass der Vorratsbehälter auch bei kleineren Beschädigungen des Führungskörpers weiterhin benutzt werden kann. Bevorzugt kann in diesem Fall der Führungskörper kürzer, und besonders bevorzugt ein Drittel kürzer als die Länge des Vorratsbehälters in Einschubrichtung sein. Handhabungstechnisch weiter vorteilhaft kann der Führungskörper an einer in Einschubrichtung hinteren Stirnseite als Griffteil ausgebildet sein, so dass der Vorratsbehälter beim Einsetzen nicht an den den Innenraum umgebenden Wandungen gegriffen werden muss und diese vor Beschädigungen durch das Einschieben schützt.

In einer vorteilhaften Weiterbildung der Erfindung kann ein Datenträger zum berührungslosen Übertragen von Informationen zu und von einer Auslesevorrichtung der Aufnahme an dem Vorratsbehälter angebracht sein, wobei durch die genaue Führung des Vorratsbehälters während des Einsetzens eine genaue Positionierung des Datenträgers zur Auslesevorrichtung erfolgen kann. Bevorzugt kann der Datenträger am Boden des Führungskörpers angeordnet sein, um möglichst nahe zu der in einem Boden der Führung angeordneten Auslesevorrichtung positioniert werden zu können.

In einer weiteren bevorzugten Weiterbildung der Erfindung kann im oder am Auslass ein Kupplungsgegenstück zum automatischen Kuppeln mit einer Kupplung der Aufnahme beim Einsetzen des Vorratsbehälters vorgesehen sein, und im oder am Einlass eine entsprechende Kupplung zum Kuppeln mit dem Kupplungsgegenstück vorgesehen sein. Hierdurch kann das Einsetzen und Austauschen von Vorratsbehältern für den Benutzer möglichst einfach, zuverlässig und gefahrlos gestaltet werden. In einer vorteilhaften Fortbildung kann alternativ oder zusätzlich im oder am Auslass, bevorzugt im Kupplungsgegenstück, ein bei nicht eingesetztem Vorratsbehälter selbsttätig schließendes Ventil vorgesehen sein. Bevorzugt kann im oder am Einlass, bevorzugt in der Kupplung, ein bei nicht eingesetztem Vorratsbehälter selbsttätig schließendes Ventil vorgesehen sein. Durch diese eben beschriebenen Ausführungen der Erfindung muss der Benutzer die eigentliche Verbindung zur Zufuhr der Zusatzstoffe zwischen Auslass und Einlass nicht mehr selbst herstellen und speziell kontrollieren. Beim Herausnehmen eines Vorratsbehälters muss der Benutzer die Kupplung nur entriegeln, wobei dabei automatisch das Ventil im Auslass geschlossen wird, so dass kein Zusatzstoff auslaufen kann. Ggf. kann dabei auch das im oder am Einlass angeordnete Ventil automatisch schließen, so dass ein Rückfluss oder Herausspritzen von Zusatzstoff aus dem Einlass ebenfalls verhindert wird. So kann auf einfache Weise auch ein noch nicht vollständig entleerter Vorratsbehälter gefahrlos aus der Aufnahme herausgenommen werden.

Für die vorteilhafte Verwendung in einer Fahrzeugbehandlungsanlage, insbesondere einer Fahrzeugwaschanlage, kann der Vorratsbehälter mit einem flüssigen oder viskosen (gelförmigen) Zusatzstoff, insbesondere Waschshampoo, Schaumbildner, Wachs, Trocknungshilfsmittel, Seife, Felgenreiniger und/oder Insektenentferner, befüllt sein.

Weiter kann der eingangs genannte oder oben beschriebene Vorratsbehälter dadurch gekennzeichnet sein, dass der Auslass, gegebenenfalls mit dem Kupplungsgegenstück, zwischen einer in Einschubrichtung hinteren Stirnseite und vorderen Stirnseite des Vorratsbehälters angeordnet ist. Bevorzugt kann die eingangs genannte oder oben beschriebene Aufnahme in diesem Fall dadurch gekennzeichnet sein, dass der Einlass in Richtung einer in Einschubrichtung vorderen Einschubseite der Aufnahme verschoben ist. Bei einer bevorzugten Fortbildung dieser Ausführung kann der Auslass unter einem von der vorderen Stirnseite des Vorratsbehälters gegen die Einschubrichtung zurückspringenden Absatz des Vorratsbehälters angeordnet sein, und der Einlass kann so weit gegen die Einschubrichtung zur Einschubseite hin verschoben ist, dass ein von der vorderen Stirnseite des Vorratsbehälters gegen die Einschubrichtung zurückspringender Absatz des Vorratsbehälters über dem Einlass zu liegen kommt.

Bei dieser Ausführung können der Vorratsbehälter und die Aufnahme sehr kompakt gebaut werden und benötigen insbesondere in Einschubrichtung wenig Raum. Zudem kann auf diese Weise das Einsetzen des Vorratsbehälters in die Aufnahme und das Kuppeln von Vorratsbehälter mit Aufnahme zum Zuführen des im Vorratsbehälters enthaltenen Zusatzstoffes einfach dadurch erfolgen, dass der Vorratsbehälter von der Stirnseite in die Aufnahme eingeschoben und dabei automatisch zur Abgabe des Zusatzstoffes abdichtend gekuppelt und das oder die Ventile im Auslass und/oder Einlass automatisch geöffnet werden, ohne dass der Benutzer weitere Schritte unternehmen muss.

Vorteilhaft können der erfindungsgemäße Vorratsbehälter und die erfindungsgemäße Aufnahme in einer eingangs genannten Fahrzeugbehandlungsanlage verwendet werden.

Eine eingangs genannte Fahrzeugbehandlungsanlage ist erfindungsgemäß dadurch gekennzeichnet, dass an der Aufnahme eine Führung zum Führen des Vorratsbehälters in einer Einschubrichtung beim Einsetzen des Vorratsbehälters in die Aufnahme vorgesehen ist. Bevorzugt handelt es sich bei der Fahrzeugbehandlungsanlage um eine Fahrzeugreinigungsanlage zum Waschen von Fahrzeugen mit Waschbürsten und/oder Hochdruck, zum Aufbringen von Wachs und/oder Polieren der Fahrzeugoberflächen. Die Fahrzeugbehandlungsanlage kann vorteilhaft als Portalanlage, Durchfahranlage oder als Anlage mit Zwangsförderung der Fahrzeuge ausgestattet sein.

Weitere Besonderheiten und Vorteile der Erfindung ergeben sich aus der folgenden Beschreibung eines bevorzugten Ausführungsbeispiels anhand der Zeichnungen. Diese zeigen:
- **Fig. 1**: eine schematische dreidimensionale Schrägansicht eines erfindungsgemäßen Vorratsbehälters während des Einsetzens in eine erfindungsgemäße Aufnahme;
- **Fig. 2**: eine schematische dreidimensionale Schrägansicht des in die Aufnahme eingesetzten Vorratsbehälters aus Fig. 1 von einer anderen Seite;
- **Fig. 3**: eine schematische Draufsicht auf einen Führungskörper des Vorratsbehälters aus Fig. 1 und 2;
- **Fig. 4**: eine schematische Seitenansicht auf den Führungskörper aus Fig. 3 von in Fig. 3 unten;
- **Fig. 5**: eine schematische Draufsicht auf eine Führung der Aufnahme für den Führungskörper aus Fig. 3 und 4;
- **Fig. 6**: eine Draufsicht auf den vollständig in die Führung aus Fig. 5 eingesetzten Führungskörper aus Fig. 3 und 4 von der in Fig. 3 bis 5 linken Stirnseite;
- **Fig. 7**: einen Querschnitt durch den vollständig in die Führung aus Fig. 5 eingesetzten Führungskörper aus Fig. 3 und 4 entlang der Schnittlinie A - A;
- **Fig. 8**: einen Querschnitt durch den vollständig in die Führung aus Fig. 5 eingesetzten Führungskörper aus Fig. 3 und 4 entlang der Schnittlinie B - B.

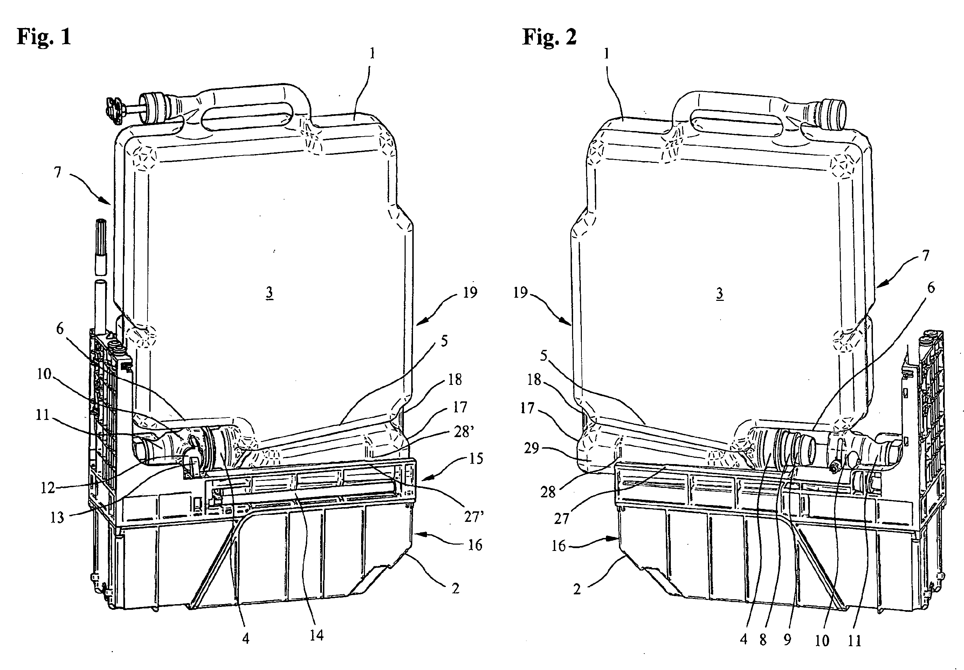

Fig. 1 zeigt eine schematische dreidimensionale Schrägansicht eines erfindungsgemäßen Vorratsbehälters 1 während des Einsetzens in einer Einschubrichtung E in eine erfindungsgemäße Aufnahme 2 einer erfindungsgemäßen, nicht gezeichneten Fahrzeugbehandlungsanlage;
Der Vorratsbehälter 1 weist eine Innenraum 3 mit einem darin enthaltenen flüssigen oder viskosen Zusatzstoff wie vorzugsweise Waschshampoo, Schaumbildner, Wachs, Reinigungshilfsmittel, Seifen, Felgenreiniger oder Insektenentferner auf. Der Vorratsbehälter 1 ist bevorzugt aus Kunststoff, insbesondere Hartplastik hergestellt, wobei er in einer fertigungstechnisch günstigen Ausführung aus zwei Halbschalen besteht, die fest aneinandergefügt sind und den Innenraum 3 abdichtend umgeben.

Um den im Innenraum 3 enthaltenen Zusatzstoff einer Dosiervorrichtung der Fahrzeugbehandlungsanlage zuführten zu können, ist am in Fig. 1 und 2 unteren Ende des Vorratsbehälters 1 ein Auslass 4 vorgesehen. Damit auch kleine Restmengen des hochkonzentrierten, zum teil zähflüssigen Zusatzstoffes zum Auslass 4 laufen und der Dosiervorrichtung zugeführt werden können, ist ein Boden 5 des Innenraums 3 zum Auslass 4 hin geneigt. Bevorzugt kann der Auslass 4 unter einem in Fig. 1 und 2 gut erkennbaren Absatz 6 des Innenraums 3 angeordnet sein. Der Absatz 6 ist dabei gegenüber einer in Einschubrichtung E vorderen Stirnseite 7des Vorratsbehälters 1 gegen die Einschubrichtung E zurückversetzt.

Der Auslass 4 kann über ein am Vorratsbehälter 1 vorgesehenes Kupplungsgegenstück 8 mit einer Ringnut 9 und eine an der Aufnahme 2 vorgesehene automatisch verriegelnde Kupplung 10 mit einem Einlass 11 der Dosiervorrichtung abdichtend, aber lösbar gekuppelt werden. Wenn der Vorratsbehälters 1 vollständig in die Aufnahme 2 eingesetzt ist und die Kupplung 10 verriegelt, werden am Auslass 4 und Einlass 11 vorgesehene, nicht gezeichnete Ventile zum Ausfließen des im Vorratsbehälter 1 enthaltenen Zusatzstoffes automatisch geöffnet. Bevorzugt sind die Ventile in der Kupplung 10 und dem Kupplungsgegenstück 8 vorgesehen. Bei nicht eingesetztem Vorratsbehälter 1 ist zumindest das am Auslass 4 vorgesehene Ventil geschlossen.

Bevorzugt hält die Kupplung 10 den Vorratsbehälter 1 automatisch in seiner eingesetzten Stellung und ist beispielsweise eine federbewirkte Schnappkupplung, welche standardmäßig verriegelt ist. Hierzu ist an der Kupplung 10 ein in Fig. 2 gezeigtes Schieberelement 12 vorgesehen welches federbewirkt in der in Fig. 2 gezeigten Stellung gehalten wird. Beim Einsetzen des Vorratsbehälters 1 in der Einsetzrichtung E und somit des Kupplungsgegenstücks 8 wird das Schieberelement 12 kurzzeitig nach in Fig. 2 hinten gedrückt, bis das Schieberelement 12 in die Ringnut 9 am Kupplungsgegenstück 8 einrastet. Hierdurch kann der Vorratsbehälter 1 nicht versehentlich aus der Aufnahme 2 herausgeholt werden oder herausfallen, und der Benutzer muss nicht daran denken, die die Kupplung 10 nach dem Einsetzen zu verriegeln.

Um die Kupplung 10 zur Entnahme des Vorratsbehälters 1 zu öffnen, wird ein Hebel 13 über einen Drehstab 14 gegen das Schieberelement 12 gedreht. Der Drehstab 14 ist dabei drehbar in der Aufnahme 2 gelagert und kann manuell oder mittels eines Werkzeugs, beispielsweise eines Schraubenziehers, von einer vorderen, im eingebauten Zustand zugänglichen und in Fig. 1 rechten und in Fig. 2 linken Einschubseite 16 der Aufnahme 2 gedreht werden.

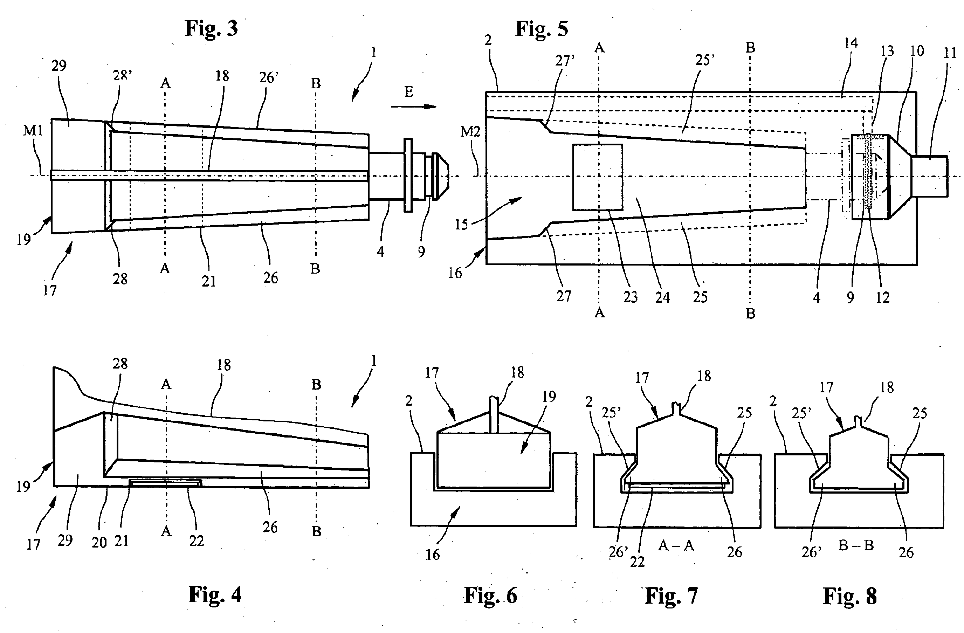

Zum einfachen Einsetzen des Vorratsbehälters 1 weist die Aufnahme 2 eine in Fig. 3 bis 8 gut erkennbare Führung 16 für einen Führungskörper 17 des Vorratsbehälters 1 auf. Die Fig. 3 bis 8 zeigen dabei eine schematische, nicht exakte Darstellung der in Fig. 1 und 2 gezeigten Teile. So zeigt Fig. 3 zeigt eine Draufsicht auf den Führungskörper 17, während andere Teile des Vorratsbehälters 1 aus Gründen der besseren Verständlichkeit weggelassen wurden.

Der Führungskörper 17 ist über einen Verbindungssteg 18 am Boden 5 des Innenraums 3 angeordnet. In einer bevorzugten Ausführung ist der Führungskörper 17 einstückig mit den restlichen Teilen des Vorratsbehälters 1 geformt, insbesondere mit den den Innenraum 3 umgebenden Wandungen. Bevorzugt kann der Führungskörper 17 einstückig an aus den Halbschalen des Vorratsbehälters 1 geformt sein. Der Führungskörper 17 ist nicht mit dem Zusatzstoff befüllt ist, so dass er ausreichend robust für die Führungsfunktion ist und oft in die Führung 15 eingesetzt und herausgenommen werden kann, insbesondere dann, wenn der Vorratsbehälter 1 mehrmals wiederbefüllt wird. Wird der Führungskörper 17 geringfügig beschädigt, so kann der Vorratsbehälter in der Regel dennoch weiterverwendet werden, da sich der Zusatzstoff nach wie vor im Innenraum 3 befindet und nicht ausläuft.

Wie in Fig. 1, 2, 4 und 6 bis 8 gut erkennbar, weist der Führungskörper 17 einen zum Auslass 4 hin geneigten, keilförmigen Verlauf auf, der in etwa der Neigung des Bodens 5 des Innenraums 3 entspricht. Wie in Fig. 3 und 6 bis 8 weiter erkennbar, verjüngt sich der Führungskörper 17 auch von der breiten, in Einschubrichtung E vorderen Stirnseite 7 zum Auslass 4 hin, so dass der Führungskörper 17 zum Auslass 4 hin eine im wesentlichen doppelt keilförmige Form hat.

An einem im wesentlichen flachen Boden 20 des Führungskörpers 17 ist eine Vertiefung 21 vorgesehen, an der ein Transponder 22 oder ein anderer berührungslos auslesbar und/oder beschreibbarer Datenträger zur Speicherung von Informationen zu den im Vorratsbehälter 1 enthaltenen Zusatzstoff, wie Art des Zusatzstoffes, Dosierungsanweisungen, Alter, Verfalldatum, aktueller Füllstand des Zusatzstoffes vorgesehen. Der Transponder 22 ist über eine in der Aufnahme 2 angeordnete und in Fig. 5 angedeutete Auslesevorrichtung 23 der Dosiervorrichtung der Fahrzeugbehandlungsanlage auslesbar und/oder beschreibbar, welche bevorzugt mit einer Steuerung der Fahrzeugbehandlungsanlage verbunden ist.

Da der Führungskörper 17 mit seinem Boden 20 auf einem Boden 24 der Führung 15 aufliegt, dient die Vertiefung 21 vorteilhaft zum Schutz des Transponders 22 beim Einschieben oder Herausziehen des Vorratsbehälters 1 respektive des Führungskörpers 17 aus der Führung 15. Die Vertiefung 21 reicht vorliegend über die gesamte Breite des Bodens 20, kann aber auch kleiner und an einer anderen Stelle des Bodens 20 angeordnet sein.

Wie vor allem aus Fig. 3 und 5 sowie 6 bis 8 gut erkennbar, sind die Führung 15 und der Führungskörper 17 in ihren Außenabmessungen zum Einfachen Einschieben des Führungskörpers 17 in die Führung 15 angepasst. Zudem weist die Führung 15 als Führungsnuten 25, 25' ausgebildete Führungsgegenelemente auf, in die entsprechende ausgeformte Führungselemente 26, 26' des Führungskörper 17 eingreifen. Wie vor allem aus den Schnittansichten in Fig. 6 bis 8 hervorgeht, verjüngt sich die Breite der Führungselemente 26, 26' zum Auslass 4 hin, während sich die Führungsnuten 25, 25' entsprechend zum Einlass 11 hin verengen. Entsprechendes gilt auch in der Höhe der Führungsnuten 25, 25' und der Führungselemente 26, 26', welche zum Einlass 11 bzw. zum Auslass 4 hin abnimmt. Hierdurch lässt sich der Vorratsbehälter 1 einfach und dennoch passgenau in die Aufnahme 1 einsetzen, so dass das Kupplungsgegenstück 8 und die Kupplung 10 einfach gekuppelt und dabei die Ventile am Auslass 4 und Einlass 11 einfach geöffnete werden können.

Um ein zu weites Einschieben des Vorratsbehälters 1 in die Aufnahme 2 und somit eine Beschädigung des Kupplungsgegenstücks 8, der Kupplung 10 sowie insbesondere der am Auslass 4 und Einlass 11 angeordneten Ventile zu verhindern, sind an der Führung 15 im wesentlichen senkrecht nach oben verlaufende Vorsprünge 27, 27' und am Führungskörper 17 entsprechende Rücksprünge 28, 28' angeordnet, wie in Fig. 3 bis 5 gut erkennbar. Die Vorsprünge 27, 27' und Rücksprünge 28, 28' sind so angeordnet, dass bei vollständig in die Aufnahme 2 eingeschobenem Vorratsbehälter 1 das Kupplungsgegenstück 7 von der Kupplung 10 vollständig aufgenommen und gekuppelt werden kann, wie in Fig. 5 durch die strichpunktierten Linien angedeutet.

Die Rücksprünge 28, 28' und mit ihnen die Führungselemente 26, 26' sind etwas von der in Einschubrichtung E hinteren Stirnseite 19 des Vorratsbehälters 1 respektive des Führungskörpers 17 zum Auslass 4 hin versetzt, so dass der Führungskörper 17 ein stirnseitig breiteres Griffteil 29 ausbildet, über das der Führungskörper 17 und somit der Vorratsbehälter 1 leichter handhabbar und greifbar ist. Zudem können die von der Stirnseite 19 zum Auslass 4 hin versetzten Führungselemente 26, 26' weniger leicht beim Greifen des Führungskörpers 17 beschädigt werden. Die Rücksprünge 28, 28' und mit ihnen die Führungselemente 26, 26' können aber auch an der Stirnseite 18 beginnen. Auch können die Rücksprünge 28, 28' und die Führungselemente 26, 26' an unterschiedlichen Stellen angeordnet sein, wobei die Rücksprünge 28, 28' auch in Richtung des Auslass 4 verschoben sein können.

Die Anordnung der Führungsnuten 25, 25' und Führungselemente 26, 26' an Aufnahme 2 bzw. Vorratsbehälter 1 können auch vertauscht sein. Auch können vorteilhaft anderen Schiebeführungen verwendet werden. So können am Vorratsbehälter 1 längliche, im Querschnitt halbkreisförmige Führungsüberstände vorgesehen sein, welche in entsprechende, im Querschnitt halbkreisförmige Führungsnuten eingreifen, oder an der Führung 15 sind längliche, im Querschnitt halbkreisförmige Führungsüberstände vorgesehen, welche in längliche Führungsnuten am Vorratsbehälter 1 eingreifen.

### Bezugszeichenliste

- 1: Vorratsbehälter
- 2: Aufnahme
- 3: Innenraum
- 4: Auslass
- 5: Boden Innenraum
- 6: Absatz
- 7: vordere Stirnseite Vorratsbehälter
- 8: Kupplungsgegenstück
- 9: Ringnut
- 10: Kupplung
- 11: Einlass
- 12: Schieberelement
- 13: Hebel
- 14: Drehstab
- 15: Führung
- 16: Einschubseite Aufnahme
- 17: Führungskörper
- 18: Verbindungssteg
- 19: hintere Stirnseite Vorratsbehälter
- 20: Boden des Führungskörpers
- 21: Vertiefung
- 22: Transponder
- 23: Auslesevorrichtung
- 24: Boden der Führung
- 25, 25': Führungsnuten
- 26, 26': Führungselemente
- 27, 27': Vorsprünge
- 28, 28': Rücksprünge
- 29: Griffteil

## Patentansprüche

1. Vorratsbehälter (1) zum Einsetzen in eine Aufnahme (2) einer Dosiervorrichtung einer Fahrzeugbehandlungsanlage, mit einem Innenraum (3) für flüssige oder viskose Zusatzstoffe, einem beim Einsetzen in die Aufnahme (2) mit einem Einlass (11) der Dosiervorrichtung verbindbaren Auslass (4), wobei am Vorratsbehälter (1) mindestens ein Führungselement (26, 26') zum in Eingriffnehmen von mindestens einem an der Aufnahme (2) angeordneten Führungsgegerielement (25, 25') beim Einsetzen des Vorratsbehälters (1) in eine Einschubrichtung (E) in die Aufnahme (2) vorgesehen ist, **dadurch gekennzeichnet, dass** das mindestens eine Führungselement (26, 26') in Einschubrichtung (E) schräg auf eine in Einschubrichtung (E) verlaufenden Mittelachse (M1) des Vorratsbehälters (1) zuläuft, und/oder dass genau zwei Führungselemente (26, 26') vorgesehen sind, deren Abstand voneinander sich in Einschubrichtung (E) verringert.

2. Vorratsbehälter (1) nach Anspruch 1, **dadurch gekennzeichnet, dass** das mindestens eine Führungselement (26, 26') in Einschubrichtung (E) schräg nach unten geneigt ist.

3. Vorratsbehälter (1) nach einem der voranstehenden Ansprüche, **dadurch gekennzeichnet, dass** ein Längsanschlag (28, 28') daran angeordnet ist.

4. Vorratsbehälter (1) nach einem der voranstehenden Ansprüche, **dadurch gekennzeichnet, dass** das mindestens eine Führungselement (26, 26') an einem unterhalb des Bodens (5) des Innenraums (3) angeformten Führungskörper (17) angeordnet ist.

5. Vorratsbehälter (1) nach Anspruch 4, **dadurch gekennzeichnet, dass** der Führungskörper (17) kürzer, bevorzugt ein Drittel kürzer als die Länge des Vorratsbehälters (1) in Einschubrichtung (E) ist, und/oder dass der Führungskörper (17) an einer in Einschubrichtung (E) hinteren Stirnseite (19) als Griffteil (29) ausgebildet ist.

6. Vorratsbehälter (1) nach einem der voranstehenden Ansprüche, **dadurch gekennzeichnet, dass** am Auslass (4) ein Kupplungsgegenstück (8) zum Kuppeln mit einer Kupplung (10) der Aufnahme (2) vorgesehen ist, und/oder dass am Auslass (4), bevorzugt im Kupplungsgegenstück (8), ein bei nicht eingesetztem Vorratsbehälter (1) selbsttätig schließendes Ventil vorgesehen ist.

7. Vorratsbehälter (1) nach einem der voranstehenden Ansprüche oder dem Oberbegriff des Anspruchs 1, **dadurch gekennzeichnet, dass** der Auslass (4), gegebenenfalls mit dem Kupplungsgegenstück (8), zwischen einer in Einschubrichtung (E) hinteren Stirnseite (19) und vorderen Stirnseite (7) des Vorratsbehälters (1) angeordnet ist.

8. Aufnahme (2) einer Dosiervorrichtung einer Fahrzeugbehandlungsanlage für einen Vorratsbehälter (1) für flüssige oder viskose Zusatzstoffe, mit einer mit einem verschließbaren Auslass (4) des Vorratsbehälters (1) verbindbaren Einlass (11) der Dosiervorrichtung, wobei an der Aufnahme (2) eine Führung (15) mit mindestens einem Führungsgegenelement (25, 25') zum Führen von mindestens einem an dem Vorratsbehälter (1) angeordneten Führungselement (26, 26') beim Einsetzen des Vorratsbehälters (1) in eine Einschubrichtung (E) in die Aufnahme (2) vorgesehen ist, **dadurch gekennzeichnet, dass** das mindestens eine Führungsgegenelement (25, 25') in Einschubrichtung (E) schräg auf eine in Einschubrichtung (E) verlaufenden Mittelachse (M2) der Aufnahme (2) zuläuft, und/oder dass genau zwei Führungsgegenelemente (25, 25') vorgesehen sind, deren Abstand voneinander sich in Einschubrichtung (E) verringert.

9. Aufnahme (2) nach Anspruch 8, **dadurch gekennzeichnet, dass** das mindestens eine Führungsgegenelement (25, 25') in Einschubrichtung (E) schräg nach unten zu einem Boden (24) der Führung (15) geneigt ist.

10. Aufnahme (2) nach einem der Ansprüche 8 bis 9, **dadurch gekennzeichnet, dass** daran ein Längsanschlag (28, 28') angeordnet ist.

11. Aufnahme (2) nach einem der Ansprüche 8 bis 10, **dadurch gekennzeichnet, dass** am Einlass (11) eine Kupplung (10) zum Kuppeln mit einem Kupplungsgegenstück (8) des Vorratsbehälters (1) vorgesehen ist, und/oder dass am Einlass (11), bevorzugt in der Kupplung (10), ein bei nicht eingesetztem Vorratsbehälter (1) selbsttätig schließendes Ventil vorgesehen ist.

12. Aufnahme (2) nach einem der Ansprüche 8 bis 11 oder dem Oberbegriff des Anspruchs 8, **dadurch gekennzeichnet, dass** der Einlass (11) in Richtung einer in Einschubrichtung (E) vorderen Einschubseite (16) der Aufnahme (2) verschoben ist.

13. Fahrzeugbehandlungsanlage mit einer Dosiervorrichtung zur Dosierung von flüssigen oder viskosen Zusatzstoffen in ein Grundmedium, mindestens einer Aufnahme (2) für einen mit den Zusatzstoffen befüllten Vorratsbehälter (1), wobei die Aufnahme (2) einen mit einem verschließbaren Auslass des Vorratsbehälters (1) abdichtend verbindbaren Einlass (11) der Dosiervorrichtung aufweist, wobei an der Aufnahme (2) eine Führung (15) zum Führen des Vorratsbehälters (1) in einer Einschubrichtung (E) beim Einsetzen des Vorratsbehälters (1) in die Aufnahme (2) vorgesehen ist, **dadurch gekennzeichnet, dass** der Vorratsbehälter (1) nach einem der Ansprüche 1 bis 7 und die Aufnahme (2) nach einem der Ansprüche 8 bis 12 ausgebildet sind.

## Claims

1. Storage container (1) for insertion into a mounting receptacle (2) of a metering device of a vehicle treatment installation, with an interior space (3) for liquid or viscous additives, an outlet (4) which can be connected with an inlet (11) of the metering device when inserted into the mounting receptacle (2), wherein at least one guide element (26, 26') is provided on the storage container (1) for engagement with at least one opposing guide element (25, 25') arranged on the mounting receptacle (2) when the storage container (1) is inserted in an insertion direction (E) into the mounting receptacle (2), **characterised in that** the at least one guide element (26, 26') tapers obliquely in the insertion direction (E) onto a central axis (M1) of the storage container (1) running in the insertion direction (E), and/or in that just two guide elements (26, 26') are provided the spacing of which from one another reduces in the insertion direction (E).

2. Storage container (1) according to claim 1, **characterised in that** the at least one guide element (26, 26') is inclined obliquely downwards in the insertion direction (E).

3. Storage container (1) according to one of the preceding claims, **characterised in that** a longitudinal stop (28, 28') is arranged on it.

4. Storage container (1) according to one of the preceding claims, **characterised in that** the at least one guide element (26, 26') is arranged on a guide body (17) moulded underneath the bottom (5) of the interior space (3).

5. Storage container (1) according to claim 4, **characterised in that** the guide body (17) is shorter, preferably one third shorter, than the length of the storage container (1) in the insertion direction (E), and/or **in that** the guide body (17) is embodied in the form of a handle part (29) on an end side (19) which is at the rear in the insertion direction (E).

6. Storage container (1) according to one of the preceding claims, **characterised in that** an opposing coupling piece (8) is provided on the outlet (4) for coupling with a coupling (10) of the mounting receptacle (2), and/or **in that** a valve which closes automatically when the reservoir (1) is not inserted is provided on the outlet (4), preferably in the opposing coupling piece (8).

7. Storage container (1) according to one of the preceding claims or the preamble of claim 1, **characterised in that** the outlet (4), optionally with the opposing coupling piece (8), is arranged between an end side (19) which is at the rear in the insertion direction (E), and the front end side (7) of the storage container (1).

8. Mounting receptacle (2) of a metering device of a vehicle treatment installation for a reservoir (1) for liquid or viscous additives, with an inlet (11) of the metering device which can be connected with a closable outlet (4) of the storage container (1), wherein a guide (15) is provided on the mounting receptacle (2) with at least one opposing guide element (25, 25') for guidance of at least one guide element (26, 26') arranged on the storage container (1) when the storage container (1) is inserted in an insertion direction (E) into the mounting receptacle (2), **characterised in that** the at least one opposing guide element (25, 25') tapers obliquely in the insertion direction (E) onto a central axis (M2) of the mounting receptacle (2) running in the insertion direction (E), and/or **in that** just two opposing guide elements (25, 25') are provided the spacing of which from one another reduces in the insertion direction (E).

9. Mounting receptacle (2) according to claim 8, **characterised in that** the at least one opposing guide element (25, 25') is inclined obliquely downwards in the insertion direction (E) to a bottom (24) of the guide (15).

10. Mounting receptacle (2) according to one of claims 8 to 9, **characterised in that** a longitudinal stop (28, 28') is arranged on it.

11. Mounting receptacle (2) according to one of claims 8 to 10, **characterised in that** a coupling (10) is provided on the inlet (11) for coupling with an opposing coupling piece (8) of the storage container (1), and/or **in that** a valve which closes automatically when the storage container (1) is not inserted is provided on the inlet (11), preferably in the coupling (10).

12. Mounting receptacle (2) according to one of claims 8 to 11 or the preamble of claim 8, **characterised in that** the inlet (11) is displaced in the direction of an insertion side (16) of the mounting receptacle (2) which is at the front in the insertion direction (E).

13. Vehicle treatment installation with a metering device for metering liquid or viscous additives into a basic medium, at least one mounting receptacle (2) for a storage container (1) filled with the additives, wherein the mounting receptacle (2) exhibits an inlet (11) of the metering device which can be connected sealingly with a closable outlet of the storage container (1), wherein a guide (15) is provided on the mounting receptacle (2) for guidance of the storage container (1) in an insertion direction (E) when the storage container (1) is inserted into the mounting receptacle (2), **characterised in that** the storage container (1) is embodied according to one of claims 1 to 7 and the mounting receptacle (2) is embodied according to one of claims 8 to 12.

## Revendications

1. Réservoir de stockage (1) pour l'utilisation dans un logement (2) d'un dispositif de dosage d'une installation de traitement de véhicule, avec un espace intérieur (3) pour des additifs liquides ou visqueux, une sortie (4) pouvant être reliée lors de l'utilisation dans le logement (2) à une entrée (11) du dispositif de dosage, au moins un élément de guidage (26, 26') étant prévu sur le réservoir de stockage (1) pour la mise en prise d'au moins un élément antagoniste de guidage (25, 25') agencé sur le logement (2) lors de l'utilisation du réservoir de stockage (1) dans un sens d'insertion (E) dans le logement (2), **caractérisé en ce que** l'au moins un élément de guidage (26, 26') se termine dans le sens d'insertion (E) en biais vers un axe médian (M1) s'étendant dans le sens d'insertion (E) du réservoir de stockage (1) et/ou **en ce que** précisément deux éléments de guidage (26, 26') sont prévus, dont la distance entre eux se réduit dans le sens d'insertion (E).

2. Réservoir de stockage (1) selon la revendication 1, **caractérisé en ce que** l'au moins un élément de guidage (26, 26') est incliné en biais vers le bas dans le sens d'insertion (E).

3. Réservoir de stockage (1) selon l'une quelconque des revendications précédentes, **caractérisé en ce qu'**une butée longitudinale (28, 28') est agencée dessus.

4. Réservoir de stockage (1) selon l'une quelconque des revendications précédentes, **caractérisé en ce que** l'au moins un élément de guidage (26, 26') est agencé sur un corps de guidage (17) formé sous le fond (5) de l'espace intérieur (3).

5. Réservoir de stockage (1) selon la revendication 4, **caractérisé en ce que** le corps de guidage (17) est plus court, de préférence d'un tiers que la longueur du réservoir de stockage (1) dans le sens d'insertion (E) et/ou **en ce que** le corps de guidage (17) est réalisé sur un côté frontal (19) arrière dans le sens d'insertion (E) comme partie de préhension (29).

6. Réservoir de stockage (1) selon l'une quelconque des revendications précédentes, **caractérisé en ce qu'**une pièce antagoniste de couplage (8) est prévue sur la sortie (4) pour le couplage avec un couplage (10) du logement (2) et/ou **en ce qu'**une soupape se fermant automatiquement, en cas de réservoir de stockage (1) non utilisé, est prévue sur la sortie (4), de préférence dans la pièce antagoniste de couplage (8).

7. Réservoir de stockage (1) selon l'une quelconque des revendications précédentes ou le préambule de la revendication 1, **caractérisé en ce que** la sortie (4) est agencée éventuellement avec la pièce antagoniste de couplage (8) entre un côté frontal (19) arrière et le côté frontal (7) avant dans le sens d'insertion (E) du réservoir de stockage (1).

8. Logement (2) d'un dispositif de dosage d'une installation de traitement de véhicule pour un réservoir de stockage (1) pour des additifs liquides ou visqueux, avec une entrée (11) pouvant être reliée à une sortie refermable (4) du réservoir de stockage (1) du dispositif de dosage, un guidage (15) avec au moins un élément antagoniste de guidage (25, 25') étant prévu sur le logement (2) pour le guidage d'au moins un élément de guidage (26, 26') agencé sur le réservoir de stockage (1) lors de l'utilisation du réservoir de stockage (1) dans un sens d'insertion (E) dans le logement (2), **caractérisé en ce que** l'au moins un élément antagoniste de guidage (25, 25') se termine dans le sens d'insertion (E) en biais vers un axe médian (M2) s'étendant dans le sens d'insertion (E) du logement (2), et/ou **en ce que** précisément deux éléments antagonistes de guidage (25, 25') sont prévus, dont la distance entre eux se réduit dans le sens d'insertion (E).

9. Logement (2) selon la revendication 8, **caractérisé en ce que** l'au moins un élément antagoniste de guidage (25, 25') est incliné dans le sens d'insertion (E) en biais vers le bas vers un fond (24) du guidage (15).

10. Logement (2) selon l'une quelconque des revendications 8 à 9, **caractérisé en ce qu'**une butée longitudinale (28, 28') est agencée dessus.

11. Logement (2) selon l'une quelconque des revendications 8 à 10, **caractérisé en ce qu'**un couplage (10) est prévu sur l'entrée (11) pour le couplage avec une pièce antagoniste de couplage (8) du réservoir de stockage (1) et/ou **en ce qu'**une soupape se fermant automatiquement, en cas de réservoir de stockage non utilisé (1), est prévue sur l'entrée (11), de préférence dans le couplage (10).

12. Logement (2) selon l'une quelconque des revendications 8 à 11 ou le préambule de la revendication 8, **caractérisé en ce que** l'entrée (11) est poussée en direction d'un côté d'insertion (16) avant dans le sens d'insertion (E) du logement (2).

13. Installation de traitement de véhicule avec un dispositif de dosage pour le dosage d'additifs liquides ou visqueux dans un milieu de base, au moins un logement (2) pour un réservoir de stockage (1) rempli d'additifs, le logement (2) présentant une entrée (11) pouvant être reliée de manière étanche à une sortie refermable du réservoir de stockage (1) du dispositif de dosage, un guidage (15) étant prévu sur le logement (2) pour le guidage du réservoir de stockage (1) dans un sens d'insertion (E) lors de l'utilisation du réservoir de stockage (1) dans le logement (2), **caractérisée en ce que** le réservoir de stockage (1) est réalisé selon l'une quelconque des revendications 1 à 7 et le logement (2) est réalisé selon l'une quelconque des revendications 8 à 12.
